(19)

**Europäisches Patentamt**
**European Patent Office**
**Office européen des brevets**

(11) **EP 4 232 996 B1**

(12) **EUROPEAN PATENT SPECIFICATION**

(45) Date of publication and mention
of the grant of the patent:
**17.06.2026  Bulletin 2026/25**

(21) Application number: **20803807.5**

(22) Date of filing: **06.11.2020**

(51) International Patent Classification (IPC):
**G06T 5/60** (2024.01)

(52) Cooperative Patent Classification (CPC):
**G06T 5/60;** G06T 2207/10004; G06T 2207/20021;
G06T 2207/20081; G06T 2207/20084

(86) International application number:
**PCT/EP2020/081351**

(87) International publication number:
**WO 2022/096123 (12.05.2022 Gazette 2022/19)**

(54) **A DEVICE AND METHOD FOR IMAGE PROCESSING**

VORRICHTUNG UND VERFAHREN ZUR BILDVERARBEITUNG

DISPOSITIF ET PROCÉDÉ DE TRAITEMENT D'IMAGES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.08.2023  Bulletin 2023/35**

(73) Proprietor: **Huawei Technologies Co., Ltd.**
**Shenzhen, Guangdong 518129 (CN)**

(72) Inventors:
• **CHEN, Liang**
**80992 Munich (DE)**
• **SLABAUGH, Gregory**
**80992 Munich (DE)**
• **TORR, Philip**
**Oxford (GB)**
• **SUN, Shuyang**
**80992 Munich (DE)**

(74) Representative: **Körber, Martin Hans**
**Mitscherlich PartmbB**
**Karlstraße 7**
**80333 München (DE)**

(56) References cited:
• **MICHAËL GHARBI ET AL: "Deep joint
demosaicking and denoising", ACM
TRANSACTIONS ON GRAPHICS, ACM, NY, US,
vol. 35, no. 6, 11 November 2016 (2016-11-11),
pages 1 - 12, XP058306363, ISSN: 0730-0301,
DOI: 10.1145/2980179.2982399**
• **ABHINAV SHRIVASTAVA ET AL: "Training
Region-Based Object Detectors with Online Hard
Example Mining", 2016 IEEE CONFERENCE ON
COMPUTER VISION AND PATTERN
RECOGNITION (CVPR), 1 June 2016 (2016-06-01),
pages 761 - 769, XP055539151, ISBN:
978-1-4673-8851-1, DOI: 10.1109/CVPR.2016.89**
• **YANG FAN ET AL: "Learning What Data to
Learn", ARXIV.ORG, CORNELL UNIVERSITY
LIBRARY, 201 OLIN LIBRARY CORNELL
UNIVERSITY ITHACA, NY 14853, 28 February
2017 (2017-02-28), XP080956801**

EP 4 232 996 B1

**Description**

**FIELD OF THE INVENTION**

This invention relates to restoration processing of degraded image data using machine learning models.

**BACKGROUND**

Image restoration processing seeks to improve the quality of a degraded image. There are many common forms of image degradation, including noise, blur, limited contrast, or low resolution. Many modern approaches to image restoration are based on machine learning with a deep neural network comprising an architecture and a set of parameters, also known as weights. The parameters are found during a training process (also known as learning) which performs mathematical optimization of an error computed using training data.

In the case of image restoration, the training data typically comprises a collection of image pairs, each pair consisting of a degraded image and a ground truth restored image. Each degraded image is passed into the network, which restores the image in a forward pass. The restored image is compared to the ground truth image, and differences between the two are encoded into an error, also known as a loss. The error is then back-propagated through the network in a backward pass that updates the parameters. This process - forward pass, followed by a backward pass - is repeated many times over the collection of images until convergence. A training method that updates all the parameters in the network from input to output is known as end-to-end. The final trained deep network, comprising architecture and learned parameters, is also known as a model and can then be used to restore new, unseen degraded images during inference. Often patches, or cropped segments of an image are used for training for reasons of computational efficiency.

A standard image restoration learning pipeline includes building a database, sampling the training data, building a network and its optimization. Existing methods for training typically sample training data uniformly from the database. However, uniform sampling does not carefully consider the data distribution and intrinsic features. Image restoration tasks often use small segments randomly cropped from an entire image as training samples. However, many of the segments cropped from the images are too simple, which lead to a long-tail training data distribution. This data distribution results in poor model performance.

Existing image restoration approaches use an end-to-end scheme producing the high-quality images from the low-quality ones. In most approaches, every pixel is sampled with the same probability and contributes equally to the loss, such as image denoising, image deblur, joint denoising and demosaicing, super-resolution, and other image restoration tasks. However, different parts of real images have different characteristics, e.g. high frequency and low frequency patterns. The characteristic differences can be crucial for some tasks in which the degradation is local, e.g. local motion blur. Training the model on images with different characteristics similarly cannot achieve the highest performance. In order to tune the network towards challenging samples, some studies reweighted the training data and demonstrated that deep model can obtain better performance by mining hard samples. Specifically, after training a deep neural network for demosaicing, existing methods manually selected hard samples to fine-tune the network. However, their data weighting method was done with a laborious two-stage process. In addition, there is not guarantee that the selected hard samples can improve the generalizability of the network.

It is desirable to develop an improved sampling process for training an image restoration network whereby images which are often more useful for training the network are used, resulting in improved performance for image restoration.

MICHAËL GHARBI ET AL, "Deep joint demosaicking and denoising", ACM TRANSACTIONS ON GRAPHICS, ACM, NY, US, (20161111), vol. 35, no. 6, pages 1 - 12, discloses an image demosaicking and denoising solution including training a network on standard datasets and using it to demosaick and denoise millions of ground-truth photographs in order to mine for hard cases. ABHINAV SHRIVASTAVA ET AL, "Training Region-Based Object Detectors with Online Hard Example Mining", 2016 IEEE CONFERENCE ON COMPUTER VISION AND PATTERN RECOGNITION (CVPR), (20160601), pages 761 - 769, discusses training an object detection network.

**SUMMARY OF THE INVENTION**

According to one aspect there is provided a training device as defined in claim 1.

The image processing neural network model may be trained according to the steps of: receiving and providing the degraded image data as an initial input to the training device; passing the degraded image data to the image processing neural network model configured to create reconstructed image data by performing the restoration processing on the degraded image data; feeding the reconstructed image to the segmentation neural network model configured to select the set of image segments from one or more candidate images and generate trainability scalar data; applying the trainability scalar data to the reconstructed image data to determine weighted loss data; and updating the image processing neural network model based on the weighted loss data.

The generating of the trainability scalar data by the segmentation neural network model may comprise: dividing the reconstructed image into a plurality of segments; down-sampling each segment to a single pixel value; and combining the plurality of single pixel values to form a scalar weight map.

The down-sampling may comprise a plurality of convolutional blocks and a final binarization layer to provide a scalar value representing the trainability of each of the plurality of segments.

The binarization layer may comprise a binarization function. The binarization function may be:

$$\phi(x) = \frac{1}{1 + e^{-Tx}}$$

where $\phi(\cdot)$ is a sigmoid function with temperature T, and x is any possible variable.

The segmentation neural network model may operate on the reconstructed image to generate the trainability scalar data according to:

$$t_p = \phi\left(f(I_p; W_f)\right),$$

where $I_p$ represents each segment at location p on the reconstructed image I, f and $W_f$ represent the function of the segmentation neural network model and the corresponding weights learnt for the function f respectively, and $\phi$ represents a binarization function.

The weighted loss data may be determined by applying the trainability scalar data onto the reconstructed image data by calculating:

$$L_p = \frac{N}{\sum_N^p t_p} t_p L_p^R$$

where $L_p^R$ is the loss function for the restoration processing of each segment, N represents the number of segments in the degraded image data, and loss weight $\frac{N}{\sum_N^p t_p}$ rescales the loss to its original magnitude.

According to another aspect there is provided a method of training an image restoration device based on a set of image segments selected from one or more candidate images in dependence on a segmentation neural network model, the method comprising: implementing the segmentation neural network model to select the set of image segments for training the image restoration device from one or more candidate images; and optimising an image processing neural network model of the image restoration device by performing restoration processing on the selected set of image segments.

The method comprises generating by the segmentation neural network model, trainability scalar data based on a reconstructed image output by the image processing neural network model; combining the trainability scalar data with the reconstructed image output by the image processing neural network model; and optimising the image processing neural network model based on the combined scalar data and image output.

The generating of the trainability scalar data by the segmentation neural network model may comprise: dividing the reconstructed image into a plurality of segments; down-sampling each segment to a single pixel value; and combining the plurality of single pixel values to form a scalar weight map.

The down-sampling comprises a plurality of convolutional blocks and a final binarization layer to provide a scalar value representing the trainability of each of the plurality of segments.

The binarization layer may comprise a binarization function. The binarization function may be:

$$\phi(x) = \frac{1}{1 + e^{-Tx}}$$

where $\Phi(\cdot)$ is a sigmoid function with temperature T, and x is any possible variable. The segmentation neural network model may operate on the reconstructed image to generate the trainability scalar data according to:

$$t_p = \phi\left(f(I_p; W_f)\right)$$

where $I_p$ represents each segment at location p on the reconstructed image I, f and $W_f$ represent the function of the segmentation neural network model and the corresponding weights learnt for the function f respectively, and $\phi$ represents a binarization function. The weighted loss data may be determined by applying the trainability scalar data onto the reconstructed image data by calculating:

$$L_p = \frac{N}{\sum_N^p t_p} t_p L_p^R$$

where $L_p^R$ is the loss function for the restoration processing of each segment, N represents the number of segments in the degraded image data, and loss weight $\frac{N}{\sum_N^p t_p}$ rescales the loss to its original magnitude.

According to another aspect there is provided an image restoration device according to claim 12.

**BRIEF DESCRIPTION OF THE FIGURES**

The present invention will now be described by way of example with reference to the accompanying drawings. In the drawings:

Figure 1 shows a broad overview of how the proposed method works.

Figure 2 shows the architecture of the proposed method.

Figure 3 shows an example of selected segments resulting from the implementation of the proposed segmentation neural network.

Figure 4 shows an example result for a demosaicing restoration process.

Figure 5 shows an example of a device configured implement the proposed approach for image restoration processing.

## DETAILED DESCRIPTION OF THE INVENTION

The proposed approach emphasizes the training data which improves the model's performance. Particular aspects of the approach comprise an end-to-end learning method that considers each candidate image segment with a different weight. The weight map of each candidate image is learned by a separate network based on active learning. The proposed approach can be applied to multiple low-level vision tasks including image demosaicing, denoising, and joint denoising and demosaicing.

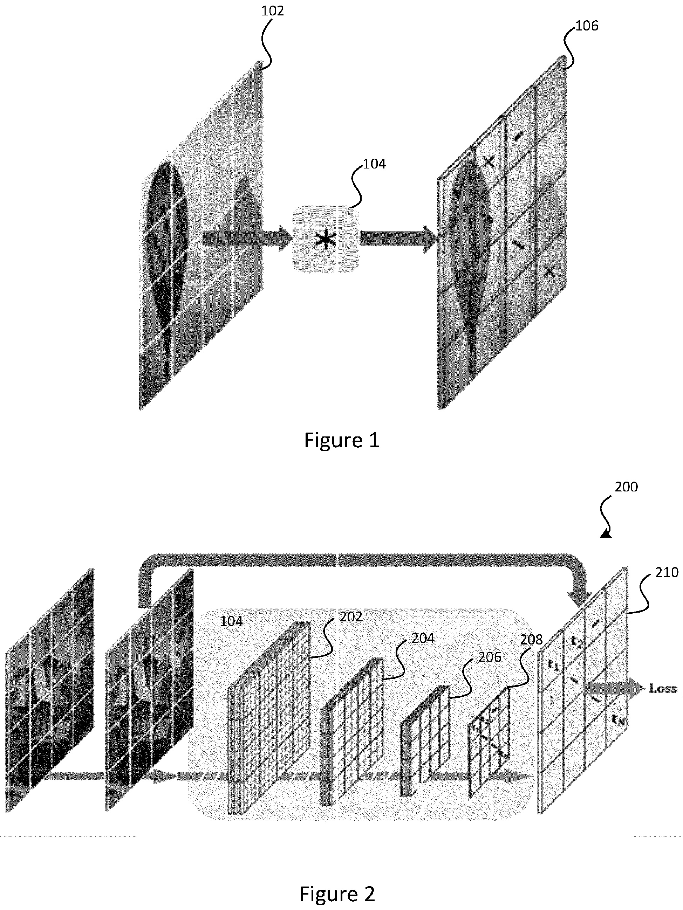

Figure 1 shows a broad overview of how the proposed method works. The proposed method learns different weights for different image parts or segments during training based on active-learning. The weights are encoded on a per-segment basis, forming a weight map 106 as shown on the right-hand side of Figure 1. The map 106 is optimized based on the quality of the restored image 102. Instead of directly manipulating the data, the proposed approach does a hard-negative sampling on loss level. A restored image 102 is evaluated by the a segmentation neural network model 104 to identify image segments of one or more candidate images used for training to create a set of image segments for training of an image restoration device.

The goal is to automatically distinguish the hard samples from the entire dataset and select them as the training samples. Generally speaking, methods designed for low-level vision tasks are doing image-to-image translation, which means that the difficulty of each input sample could be measured by the quality of the output image. Another network is therefore applied on top of the main task network, e.g., denoising/demosaicing, to evaluate the quality of the output image. The network may also be referred to as PatchNet because it is used to re-weight patches or segments within the image, correspondingly, the trunk network that is responsible for restoring the original image may be referred to as RestoreNet.

Therefore there is proposed a selection device, the selection device configured to select a set of image segments from one or more candidate images for training of an image restoration device. The selection device may thus be configured to implement a segmentation neural network model to identify image segments of one or more candidate images for the set of image segments.

There is also proposed a training device configured to train an image restoration device based on a first set of image segments selected from one or more candidate images in dependence on a segmentation neural network model. The training device may be configured to implement the segmentation neural network model to select the first set of image segments for training the image restoration device so as to enhance the ability of the image processing neural network model to direct restoration processing on degraded image data.

Specifically, the segmentation neural network model may be configured to generate trainability scalar data based on a reconstructed image output by the image processing neural network model to be combined with the reconstructed image to optimise the image processing neural network model.

The image processing neural network model can be trained according to the following steps. Receiving and providing the degraded image data as an initial input to the training device. Passing the degraded image data to the image processing neural network model configured to create reconstructed image data by performing the restoration processing on the degraded image data. Feeding the reconstructed image to the segmentation neural network model configured to select the set of image segments from one or more candidate images and generate trainability scalar data. Applying the trainability scalar data to the reconstructed image data to determine weighted loss data. And then updating the image processing neural network model based on the weighted loss data.

Figure 2 shows the architecture of the proposed method. The segmentation neural network 104 for selecting the image segments may be a feed-forward network with $log_2\,k$ stages. Each stage may contain several convolutions and a down-sampling operator 202, 204, 206, 208, so each input segment can be finally down-sampled to only one single trainability scalar. The trainability scalar may then be applied back onto the entire segment through an attention-like element-wise multiplication operation indicated by the weighted segments 210. The masked output can be supervised by a loss, which results in the whole framework being trained in an end-to-end manner.

As shown in the Figure 2, the output of the image processing neural network, for example an RGB image, may be fed into the segmentation neural network as the input. By down-sampling each segment with a pre-defined size into a single pixel that represents the trainability of that segment, the problem is formulated as a supervised regression problem. The segmentation neural network is divided into multiple stages that gradually transform the image into a trainability scalar. Each stage could be composed by several convolutional blocks and a down-sampling layer. That is, generating the trainability scalar may comprise dividing the reconstructed image into a plurality of segments, down-sampling each segment to a single pixel value, and combining the plurality of single pixel values to form a scalar weight map. The down-sampling may comprise a plurality of convolutional blocks and a final binarization layer to provide a scalar value representing the trainability of each of the plurality of segments

We denote each patch at location p on the output restored image I from the image processing neural network as $I_p$, for which the trainability scalar is denoted as $t_p$, then the whole process could be described as:

$$t_p = \phi\left(f(I_p; W_f)\right), \qquad (1)$$

where $f$ and $W_f$ represent the segmentation neural network and its corresponding learnable weights within the whole network, and $\phi$ represents the binarization function. Normally p on the input image should be a square-shaped bounding box with size $k \times k$.

To imitate the selecting operation, the trainability scalar should be binarized. Here we use a sigmoid function $\Phi(\cdot)$ with temperature T controlling the sharpness of the function for binarization, which could be formulated as:

$$\phi(x) = 1 / (1 + +e^{-Tx}) \qquad (2)$$

where x here denotes any possible variable. The binarized output of the function $\Phi(\cdot)$ will be also served as the final output of the segmentation neural network. In this way, we obtain our trainability value $t_p$ for each input segment p.

Intuitively, to guide the image processing neural network with the trainability value, it is possible to apply $t_p$ back onto the output of the image processing neural network $I_p$ during the loss computation.

Assume that the original loss function for the image processing neural network of each patch is $L^R$, and the total loss for both the segmentation neural network and the image processing neural network as $L^R_p$. The loss could be calculated by:

$$L_p = (N / \sum_N^p t_p) * t_p \, L^R_p, \qquad (3)$$

where the constant number N represents the number of patches we crop from every single image. The loss weight $N / \sum_N^p t_p$ here rescales the loss to its original magnitude. In this case, the original loss will be dispatched onto patches with larger trainability. The loss that penalizes the image processing neural network could be diverse. We choose L2 loss as the loss function for image processing neural network, and compute the corresponding final loss based on that.

In keeping with the above description of the proposed approach, a method of selecting a set of image segments from one or more candidate images for training an image restoration device is also proposed. The method comprising implementing a segmentation neural network model configured to identify image segments of the one or more candidate images to be included in the set of image segments so as to provide optimized candidate images for training the image restoration device.

Similarly, there is proposed a method for training the image restoration device. The method of training the image restoration device is based on a set of image segments selected from one or more candidate images in dependence on a segmentation neural network model. The method comprises implementing the segmentation neural network model to select the set of image segments for training the image restoration device from one or more candidate images, and optimising an image processing neural network model of the image restoration device by performing restoration processing on the selected set of image segments.

**Due to the** special demand on cross-domain verification, there is a need to collect two datasets containing the natural images and only hard samples respectively. For the natural images, it is possible to choose the large-scale dataset Vimeo-90K as the benchmark. The dataset originally is built for evaluating various video restoration tasks. With 89,800 independent clips from 4,278 videos with resolution of $448 \times 256$, the dataset is both large and diverse enough to select as the natural image dataset. The 4th image from each clip which has 7 frames in total can be selected. The whole dataset is split into 64,612 clips for training and 7,824 clips for evaluation.

For the dataset with only hard samples, it is possible to choose the MIT Moire dataset. The dataset is carefully collected from an extremely large parent set downloaded from the web. By applying a network trained on Imagenet to millions of new segments, failure cases are detected and retained to compose the MIT Moire dataset. There are 2.6 million segments with size of $128 \times 128$ within the dataset. Of course, other suitable datasets may be leveraged to create a suitable training dataset for the proposed method.

Two different networks are constructed that differ in numbers of convolutional layers or depths. The segmentation neural network, or PatchNet, may be constructed by stacking the Conv-BatchNorm-ReLU block 3 times for each stage, while the stage number may be calculated by $\log_2 k$ according to the segment size $k \times k$. The input of the segmentation neural network is a full-size image with paddings. The size of each segment $k \times k$ within the image is $64 \times 64$, and the sum of both the horizontal and vertical paddings may be set to be 64. Note that the padding size for each side of the image may be a random number less than 64 for each iteration. The random padding could be regarded as a way of data augmentation to generate more segments with different patterns. It is noted that the segmentation neural network is only applied during training, so there is no need to apply all the above described processes in testing.

The image restoration device itself may be configured to perform restoration processing on degraded image data based on a set of image segments. The image restoration device comprising an image processing neural network model trained by a training device configured to implement a segmentation neural network model to select the set of image segments from one or more candidate images.

The image processing neural network could be placed into any kind of framework used for demosaicing or JDD tasks, e.g., the DeepJDD, SGNet, etc. DeepJDD was chosen as a baseline due to its simplicity. The network consists of 18 convolutions with kernel size $3 \times 3$. Each of them has a ReLU activation function as nonlinearity.

During training the image processing neural network may be optimized with the ADAM optimizer. The learning rate is initialized to be $2.5 \times 10^{-4}$ and is adjusted per epoch with a half-cycle cosine schedule. The batch size is set to be 16 for all experiments. The network may be trained for 150 epochs and the version which performs the best on the evaluation dataset may be chosen as the final output. As for Joint Denoising & Demosaicing, the input may be perturbed with noise variance $\sigma \in [0, 16]$.

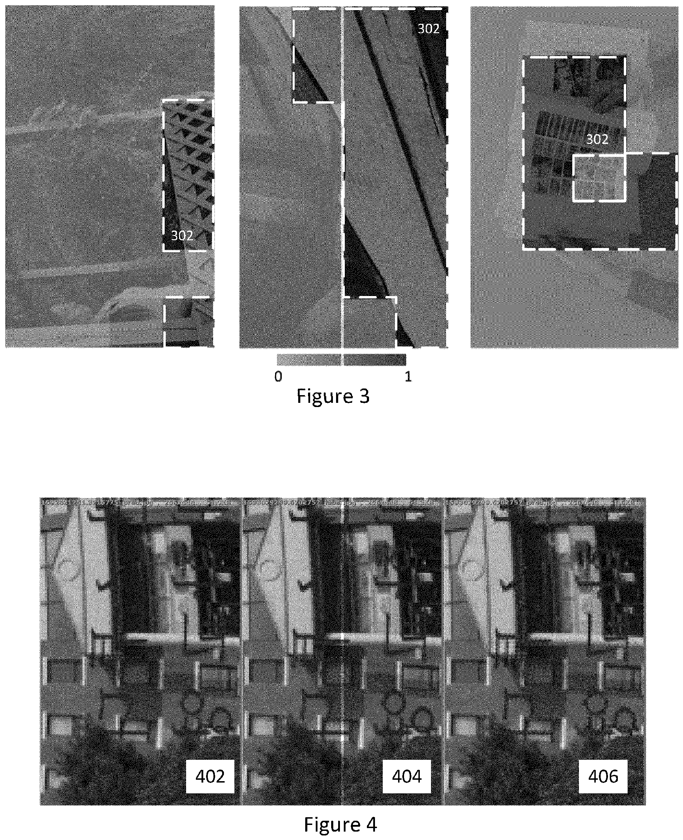

Figure 3 shows an example of resulting segments learnt from the segmentation neural network or PatchNet. The darker the segments, highlighted here by being outlined with a dashed line, the higher the trainability is. Most segments with higher frequency will be focused by the segmentation neural network. This set of selected segments 302 can then be used during the optimization and training of the image processing neural network.

Figure 4 shows an example result for a demosaicing restoration process. The left-hand image 402 has been corrected by an image processing neural network trained on image segments selected by the segmentation neural network. It can be seen that the mosaics processed by the trained image processing neural network are smoother around the characters than the results of the baseline on the right-hand side 406. The central image 404 is the ground truth image.

The proposed method has following advantages. Increased performance without extra computation during inference. Compared with conventional methods, the proposed approach only requires extra computation during training.

Robustness on imbalanced training data. In low-level vision tasks, it is difficult to balance the training data regarding image characteristics since the image characteristics are hard to describe or quantify and they are likely to be local.

The typical models can overfit on the basic patterns in the dataset but overlook the hard and rare patterns. The presently proposed approach can reweight the training data which results in a more robust model.

End-to-end training. The proposed approach learns the weight map in an end-to-end fashion without any separate/pre-training process.

The proposed approach is widely applicable for many low-level vision problems including joint denoising and demosaicing, super-resolution and deblurring.

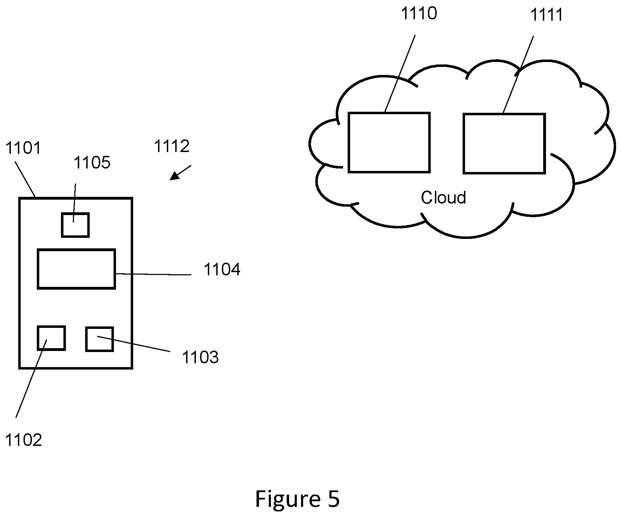

Figure 5 shows an example of a camera configured implement the above described approach to image restoration processing on images taken by an image sensor 1102 in the camera 1101. Such a camera 1101 typically includes some onboard processing capability. This could be provided by the processor 1104. The processor 1104 could also be used for the essential functions of the device. The camera typically also comprises memory a 1103.

The transceiver 1105 is capable of communicating over a network with other entities 1110, 1111. Those entities may be physically remote from the camera 1101. The network may be a publicly accessible network such as the internet. The entities 1110, 1111 may be based in the cloud. In one example, entity 1110 is a computing entity and entity 1111 is a command and control entity. These entities are logical entities. In practice they may each be provided by one or more physical devices such as servers and datastores, and the functions of two or more of the entities may be provided by a single physical device. Each physical device implementing an entity comprises a processor and a memory. The devices may also comprise a transceiver for transmitting and receiving data to and from the transceiver 1105 of camera 1101. The memory stores in a non-transient way code that is executable by the processor to implement the respective entity in the manner described herein.

The command and control entity 1111 may train the artificial intelligence models used in each module of the system. This is typically a computationally intensive task, even though the resulting model may be efficiently described, so it may be efficient for the development of the algorithm to be performed in the cloud, where it can be anticipated that significant energy and computing resource is available. It can be anticipated that this is more efficient than forming such a model at a typical camera.

In one implementation, once the deep learning algorithms have been developed in the cloud, the command and control entity can automatically form a corresponding model and cause it to be transmitted to the relevant camera device. In this example, the system is implemented at the camera 1101 by processor 1104.

In another possible implementation, an image may be captured by the camera sensor 1102 and the image data may be sent by the transceiver 1105 to the cloud for processing in the system. The resulting target image could then be sent back to the camera 1101, as shown at 1112 in Figure 11.

Therefore, the method may be deployed in multiple ways, for example in the cloud, on the device, or alternatively in dedicated hardware. As indicated above, the cloud facility could perform training to develop new algorithms or refine existing ones. Depending on the compute capability near to the data corpus, the training could either be undertaken close to the source data, or could be undertaken in the cloud, e.g. using an inference engine. The system may also be implemented at the camera, in a dedicated piece of hardware, or in the cloud.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

**Claims**

1.   A training device configured to train an image restoration device (1101) based on a set of image segments (302) selected from one or more candidate images (102) in dependence on a segmentation neural network model (104), the training device configured to implement the segmentation neural network model to select the set of image segments for training the image restoration device so as to enhance the ability of an image processing neural network model of the image restoration device (1101) to direct restoration processing on degraded image data,

   wherein the segmentation neural network model (104) is configured to: generate trainability scalar data (208) based on a reconstructed image (102) output by the image processing neural network model,
   wherein the training device is further configured to: combine the trainability scalar data with the reconstructed image output by the image processing neural network model, and optimise the image processing neural network model based on the combined scalar data and image output.

2.   The training device according to claim 1, wherein to train the image processing neural network model, the training device is configured to:

   receive the degraded image data as an initial input;
   pass the degraded image data to the image processing neural network model configured to create reconstructed image data by performing the restoration processing on the degraded image data;
   feed the reconstructed image to the segmentation neural network model configured to select the set of image segments from one or more candidate images and generate trainability scalar data;
   apply the trainability scalar data to the reconstructed image data to determine weighted loss data (210); and
   update the image processing neural network model based on the weighted loss data.

3.   The training device according to claim 1 or 2, wherein to generate the trainability scalar data (208), the segmentation neural network model is configured to:

   divide the reconstructed image into a plurality of segments;
   down-sample each segment to a single pixel value; and
   combine the plurality of single pixel values to form a scalar weight map (208).

4.   The training device according to claim 3, wherein the segmentation neural network model is configured to: perform the down-sampling based on a plurality of convolutional blocks (202, 204, 206) and a final binarization layer (208) to provide a scalar value representing the trainability of each of the plurality of segments.

5.   The training device according to claim 4, wherein the binarization layer comprises a binarization function.

6.   A method of training an image restoration device (102) based on a set of image segments (302) selected from one or more candidate images in dependence on a segmentation neural network model (104), the method comprising:

   implementing the segmentation neural network model to select the set of image segments for training the image restoration device from one or more candidate images; and
   optimising an image processing neural network model of the image restoration device by performing restoration processing on the selected set of image segments;

   wherein the method further comprises:

   generating by the segmentation neural network model, trainability scalar data (208) based on a reconstructed image (102) output by the image processing neural network model;

combining the trainability scalar data with the reconstructed image output by the image processing neural network model; and

optimising the image processing neural network model based on the combined scalar data and image output.

7. The method according to claim 6, wherein the generating of the trainability scalar data by the segmentation neural network model comprises:

dividing the reconstructed image into a plurality of segments;

down-sampling each segment to a single pixel value; and

combining the plurality of single pixel values to form a scalar weight map (210).

8. The method according to claim 7, comprises: performing the down-sampling based on a plurality of convolutional blocks (202, 204, 206) and a final binarization layer (208) to provide a scalar value representing the trainability of each of the plurality of segments.

9. The method according to claim 8, wherein the binarization layer comprises a binarization function.

10. The method according to claim 9, wherein the binarization function is:

$$\phi(x) = \frac{1}{1 + e^{-Tx}}$$

where $\phi(\cdot)$ is a sigmoid function with temperature T, and x is any possible variable.

11. The method according to any of claims 6 to 10, wherein the segmentation neural network model operates on the reconstructed image to generate the trainability scalar data according to:

$$t_p = \phi\left(f(I_p; W_f)\right)$$

where $t_p$ represents the trainability scalar data, $I_p$ represents each segment at location p on the reconstructed image I, f and $W_f$ represent the function of the segmentation neural network model and the corresponding weights learnt for the function f respectively, and $\phi$ represents a binarization function.

12. An image restoration device (1101) configured to perform restoration processing on degraded image data based on a set of image segments (302), the image restoration device comprising an image processing neural network model trained by a training device configured to implement a segmentation neural network model (104) to select the set of image segments from one or more candidate images, wherein the training device is the training device according to any of claims 1 to 5.

**Patentansprüche**

1. Trainingsgerät, das dazu konfiguriert ist, ein Bildwiederherstellungsgerät (1101) basierend auf einem Satz von Bildsegmenten (302) zu trainieren, die aus einem oder mehreren Kandidatenbildern (102) in Abhängigkeit von einem neuronalen Segmentierungsnetzwerkmodell (104) ausgewählt sind, wobei das Trainingsgerät dazu konfiguriert ist, das neuronale Segmentierungsnetzwerkmodell zu implementieren, um den Satz von Bildsegmenten zum Trainieren des Bildwiederherstellungsgeräts so auszuwählen, dass die Fähigkeit eines neuronalen Bildverarbeitungsnetzwerkmodells des Bildwiederherstellungsgeräts (1101) zum Anleiten einer Wiederherstellungsverarbeitung an degradierten Bilddaten verbessert wird,

wobei das neuronale Segmentierungsnetzwerkmodell (104) zu Folgendem konfiguriert ist: Erzeugen von skalaren Trainierbarkeitsdaten (208) basierend auf einem rekonstruierten Bild (102), das durch das neuronale Bildverarbeitungsnetzwerkmodell ausgegeben wird,
wobei das Trainingsgerät ferner zu Folgendem konfiguriert ist: Kombinieren der skalaren Trainierbarkeitsdaten mit dem durch das neuronale Bildverarbeitungsnetzwerkmodell ausgegebenen rekonstruierten Bild und Optimieren des neuronalen Bildverarbeitungsnetzwerkmodells basierend auf den skalaren Daten und der Bildausgabe, die kombiniert wurden.

2. Trainingsgerät nach Anspruch 1, wobei zum Trainieren des neuronalen Bildverarbeitungsnetzwerkmodells das Trainingsgerät zu Folgendem konfiguriert ist:

Empfangen der degradierten Bilddaten als eine anfängliche Eingabe;
Weiterleiten der degradierten Bilddaten an das neuronale Bildverarbeitungsnetzwerkmodell, das dazu konfiguriert ist, rekonstruierte Bilddaten durch Durchführen der Wiederherstellungsverarbeitung an den degradierten Bilddaten zu erstellen;
Einspeisen des rekonstruierten Bilds in das neuronale Segmentierungsnetzwerkmodell, das dazu konfiguriert ist, den Satz von Bildsegmenten aus einem oder mehreren Kandidatenbildern auszuwählen und skalare Trainierbarkeitsdaten zu erzeugen;

Anwenden der skalaren Trainierbarkeitsdaten auf die rekonstruierten Bilddaten, um gewichtete Verlustdaten (210) zu bestimmen; und Aktualisieren des neuronalen Bildverarbeitungsnetzwerkmodells basierend auf den gewichteten Verlustdaten.

3. Trainingsgerät nach Anspruch 1 oder 2, wobei zum Erzeugen der skalaren Trainierbarkeitsdaten (208) das neuronale Segmentierungsnetzwerkmodell zu Folgendem konfiguriert ist:

Aufteilen des rekonstruierten Bilds in eine Mehrzahl von Segmenten;
Herunterskalieren jedes Segments auf einen einzelnen Pixelwert; und
Kombinieren der Mehrzahl von einzelnen Pixelwerten, um eine skalare Gewichtungskarte (208) zu bilden.

4. Trainingsgerät nach Anspruch 3, wobei das neuronale Segmentierungsnetzwerkmodell zu Folgendem konfiguriert ist: Durchführen des Herunterskalierens basierend auf einer Mehrzahl von Faltungsblöcken (202, 204, 206) und einer finalen Binarisierungsschicht (208), um einen skalaren Wert bereitzustellen, der die Trainierbarkeit jedes der Mehrzahl von Segmenten darstellt.

5. Trainingsgerät nach Anspruch 4, wobei die Binarisierungsschicht eine Binarisierungsfunktion umfasst.

6. Verfahren zum Trainieren eines Bildwiederherstellungsgeräts (102) basierend auf einem Satz von Bildsegmenten (302), die aus einem oder mehreren Kandidatenbildern in Abhängigkeit von einem neuronalen Segmentierungsnetzwerkmodell (104) ausgewählt werden, wobei das Verfahren Folgendes umfasst:

Implementieren des neuronalen Segmentierungsnetzwerkmodells, um den Satz von Bildsegmenten zum Trainieren des Bildwiederherstellungsgeräts aus einem oder mehreren Kandidatenbildern auszuwählen; und
Optimieren eines neuronalen Bildverarbeitungsnetzwerkmodells des Bildwiederherstellungsgeräts durch Durchführen einer Wiederherstellungsverarbeitung an dem ausgewählten Satz von Bildsegmenten;
wobei das Verfahren ferner Folgendes umfasst:

Erzeugen, durch das neuronale Segmentierungsnetzwerkmodell, von skalaren Trainierbarkeitsdaten (208) basierend auf einem durch das neuronale Bildverarbeitungsnetzwerkmodell ausgegebenen rekonstruierten Bild (102);
Kombinieren der skalaren Trainierbarkeitsdaten mit dem durch das neuronale Bildverarbeitungsnetzwerkmodell ausgegebenen rekonstruierten Bild; und
Optimieren des neuronalen Bildverarbeitungsnetzwerkmodells basierend auf den skalaren Daten und der Bildausgabe, die kombiniert wurden.

7. Verfahren nach Anspruch 6, wobei das Erzeugen der skalaren Trainierbarkeitsdaten durch das neuronale Segmentierungsnetzwerkmodell Folgendes umfasst:

Aufteilen des rekonstruierten Bilds in eine Mehrzahl von Segmenten;
Herunterskalieren jedes Segments auf einen einzelnen Pixelwert; und
Kombinieren der Mehrzahl von einzelnen Pixelwerten, um eine skalare Gewichtungskarte (210) zu bilden.

8. Verfahren nach Anspruch 7, das Folgendes umfasst: Durchführen des Herunterskalierens basierend auf einer Mehrzahl von Faltungsblöcken (202, 204, 206) und einer finalen Binarisierungsschicht (208), um einen skalaren Wert bereitzustellen, der die Trainierbarkeit jedes der Mehrzahl von Segmenten darstellt.

9. Verfahren nach Anspruch 8, wobei die Binarisierungsschicht eine Binarisierungsfunktion umfasst.

10. Verfahren nach Anspruch 9, wobei die Binarisierungsfunktion Folgendes ist:

$$\phi(x) = \frac{1}{1 + e^{-Tx}}$$

wobei $\phi(\cdot)$ eine Sigmoidfunktion mit Temperatur T ist, und x eine beliebige mögliche Variable ist.

11. Verfahren nach einem der Ansprüche 6 bis 10, wobei das neuronale Segmentierungsnetzwerkmodell an dem rekonstruierten Bild arbeitet, um die skalaren Trainierbarkeitsdaten gemäß Folgendem zu erzeugen:

$$t_p = \phi(f(I_p;\ W_f))$$

wobei $t_p$ die skalaren Trainierbarkeitsdaten darstellt, $I_p$ jedes Segment an Position p auf dem rekonstruierten Bild I darstellt, f und $W_f$ die Funktion des neuronalen Segmentierungsnetzwerkmodells bzw. die entsprechenden für die Funktion f erlernten Gewichtungen darstellen, und φ eine Binarisierungsfunktion darstellt.

12. Bildwiederherstellungsgerät (1101), das dazu konfiguriert ist, eine Wiederherstellungsverarbeitung an degradierten Bilddaten basierend auf einem Satz von Bildsegmenten (302) durchzuführen, wobei das Bildwiederherstellungsgerät ein neuronales Bildverarbeitungsnetzwerkmodell umfasst, das durch ein Trainingsgerät trainiert ist, das dazu konfiguriert ist, ein neuronales Segmentierungsnetzwerkmodell (104) zu implementieren, um den Satz von Bildsegmenten aus einem oder mehreren Kandidatenbildern auszuwählen, wobei das Trainingsgerät das Trainingsgerät nach einem der Ansprüche 1 bis 5 ist.

**Revendications**

1. Dispositif d'apprentissage configuré pour entraîner un dispositif de restauration d'image (1101) sur la base d'un ensemble de segments d'image (302) choisi parmi une ou plusieurs images candidates (102) en fonction d'un modèle de réseau neuronal de segmentation (104), le dispositif d'apprentissage étant configuré pour mettre en œuvre le modèle de réseau neuronal de segmentation pour choisir l'ensemble de segments d'image destiné à l'apprentissage du dispositif de restauration d'image afin d'améliorer la capacité d'un modèle de réseau neuronal de traitement d'image du dispositif de restauration d'image (1101) à diriger le traitement de restauration sur des données d'image dégradées,

dans lequel le modèle de réseau neuronal de segmentation (104) est configuré pour :

générer des données scalaires de capacité d'apprentissage (208) sur la base d'une image reconstruite (102) délivrée en sortie par le modèle de réseau neuronal de traitement d'image, le dispositif d'apprentissage étant également configuré pour : combiner les données scalaires de capacité d'apprentissage avec l'image reconstruite délivrée en sortie par le modèle de réseau neuronal de traitement d'image, et optimiser le modèle de réseau neuronal de traitement d'image sur la base de la combinaison des données scalaires et de l'image délivrée en sortie.

2. Dispositif d'apprentissage selon la revendication 1, le dispositif d'apprentissage, pour l'apprentissage du modèle de réseau neuronal de traitement d'image, étant configuré pour :

recevoir les données d'image dégradées comme entrée initiale ;

passer les données d'image dégradées au modèle de réseau neuronal de traitement d'image configuré pour créer des données d'image reconstruite par l'exécution du traitement de restauration sur les données d'image dégradées ;

entrer l'image reconstruite dans le modèle de réseau neuronal de segmentation configuré pour choisir l'ensemble de segments d'image parmi une ou plusieurs images candidates et générer des données scalaires de capacité d'apprentissage ;

appliquer les données scalaires de capacité d'apprentissage aux données d'image reconstruite pour déterminer des données de perte pondérées (210) ; et

mettre à jour le modèle de réseau neuronal de traitement d'image sur la base des données de perte pondérées.

3. Dispositif d'apprentissage selon la revendication 1 ou 2, dans lequel,

pour générer les données scalaires de capacité d'apprentissage (208), le modèle de réseau neuronal de segmentation est configuré pour :

diviser l'image reconstruite en une pluralité de segments ;

sous-échantillonner chaque segment en une valeur de pixel individuelle ; et

combiner la pluralité de valeurs de pixel individuelles pour former une carte de poids scalaires (208).

4. Dispositif d'apprentissage selon la revendication 3, dans lequel le modèle de réseau neuronal de segmentation est configuré pour : effectuer le sous-échantillonnage sur la base d'une pluralité de blocs de convolution (202, 204, 206) et d'une couche de binarisation finale (208) pour fournir une valeur scalaire représentant la capacité d'apprentissage de chaque segment de la pluralité de segments.

5. Dispositif d'apprentissage selon la revendication 4, dans lequel la couche de binarisation comprend une fonction de binarisation.

6. Procédé pour l'apprentissage d'un dispositif de restauration d'image (102) sur la base d'un ensemble de segments d'image (302) choisi parmi une ou plusieurs images candidates en fonction d'un modèle de réseau neuronal de segmentation (104), le procédé comprenant les étapes consistant à :

mettre en œuvre le modèle de réseau neuronal de segmentation pour choisir l'ensemble de segments d'image destiné à l'apprentissage du dispositif de restauration d'image parmi une ou plusieurs images candidates ; et

optimiser un modèle de réseau neuronal de traitement d'image du dispositif de restauration d'image par l'exécution d'un traitement de restauration sur l'ensemble de segments d'image choisi ;

le procédé comprenant également l'étape consistant à :

générer, par le modèle de réseau neuronal de segmentation, des données scalaires de capacité d'apprentissage (208) sur la base d'une image reconstruite (102) délivrée en sortie par le modèle de réseau neuronal de traitement d'image ;

combiner les données scalaires de capacité d'apprentissage avec l'image reconstruite délivrée en sortie par le modèle de réseau neuronal de traitement d'image ; et

optimiser le modèle de réseau neuronal de traitement d'image sur la base de la combinaison des données scalaires et de l'image délivrée en sortie.

**7.** Procédé selon la revendication 6, dans lequel la génération des données scalaires de capacité d'apprentissage par le modèle de réseau neuronal de segmentation comprend les étapes consistant à :

diviser l'image reconstruite en une pluralité de segments ;

sous-échantillonner chaque segment en une valeur de pixel individuelle ; et

combiner la pluralité de valeurs de pixel individuelles pour former une carte de poids scalaires (210).

**8.** Procédé selon la revendication 7, comprenant l'étape consistant à : effectuer le sous-échantillonnage sur la base d'une pluralité de blocs de convolution (202, 204, 206) et d'une couche de binarisation finale (208) pour fournir une valeur scalaire représentant la capacité d'apprentissage de chaque segment de la pluralité de segments.

**9.** Procédé selon la revendication 8, dans lequel la couche de binarisation comprend une fonction de binarisation.

**10.** Procédé selon la revendication 9, dans lequel la fonction de binarisation est :

$$\phi(x) = \frac{1}{1 + e^{-Tx}}$$

$\Phi(\cdot)$ étant une fonction sigmoïde de la température T, et x étant toute variable possible.

**11.** Procédé selon l'une quelconque des revendications 6 à 10, dans lequel le modèle de réseau neuronal de segmentation agit sur l'image reconstruite pour générer les

$$t_p = \phi\left(f\left(I_p; W_f\right)\right)$$

données scalaires de capacité d'apprentissage selon : $t_p$ représentant les données scalaires de capacité d'apprentissage, $I_p$ représentant chaque segment à l'emplacement p sur l'image reconstruite I, f et $W_f$ représentant la fonction du modèle de réseau neuronal de segmentation et les poids correspondants appris pour la fonction f respectivement, et $\Phi$ représentant une fonction de binarisation.

**12.** Dispositif de restauration d'image (1101) configuré pour effectuer un traitement de restauration sur des données d'image dégradées sur la base d'un ensemble de segments d'image (302), le dispositif de restauration d'image comprenant un modèle de réseau neuronal de traitement d'image entraîné par un dispositif d'apprentissage configuré pour mettre en œuvre un modèle de réseau neuronal de segmentation (104) pour choisir l'ensemble de segments d'image parmi une ou plusieurs images candidates, le dispositif d'apprentissage étant le dispositif d'apprentissage selon l'une quelconque des revendications 1 à 5.

Figure 1

Figure 2

Figure 3

Figure 4

Figure 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Deep joint demosaicking and denoising. **MICHAËL GHARBI et al.** ACM TRANSACTIONS ON GRAPHICS. ACM, 11 November 2016, vol. 35, 1-12

- **ABHINAV SHRIVASTAVA et al.** Training Region-Based Object Detectors with Online Hard Example Mining. *2016 IEEE CONFERENCE ON COMPUTER VISION AND PATTERN RECOGNITION (CVPR)*, 01 June 2016, 761-769